# FASCICULE DE BREVET EUROPEEN

(11) **EP 1 826 065 B1**
(45) Date de publication et mention de la délivrance du brevet: **26.11.2008**
(21) Numéro de dépôt: 07300757.7
(22) Date de dépôt: 31.01.2007
(51) Int. Cl.: B60R 5/04

(54) **Dispositif cache bagages pour compartiment arrière d'un véhicule automobile**
Gepäckabdeckungsvorrichtung für hinteren Teil eines Kraftfahrzeugs
Device for concealing luggage in the rear compartment of an automobile

(30) Priorité: 27.02.2006 FR 0650668
(43) Date de publication de la demande: 29.08.2007
(73) Titulaire: RENAULT S.A.S., 92100 Boulogne Billancourt (FR)
(72) Inventeur: Blanc, M. Lionel, 92350, Le Plessis Robinson (FR)

(56) Documents cités:
- EP-A- 0 861 755
- DE-A1- 10 256 348
- DE-C1- 10 218 838
- DE-U1- 20 217 717

## Description

### DOMAINE TECHNIQUE

La présente invention concerne un dispositif formant un cache pour un compartiment arrière d'un véhicule automobile. L'invention se rapporte également plus spécifiquement à un dispositif cache bagage pouvant passer d'une position déployée à une position escamotée et inversement.

Dans certains véhicules automobiles, l'enlèvement des sièges arrière permet d'aménager à l'arrière du véhicule une zone ou un compartiment de stockage de marchandises. De tels véhicules présentent un dispositif amovible de cache bagages permettant de cacher les marchandises déposées dans le compartiment de stockage que l'on pourrait voir à travers les différentes vitres du véhicule. Un tel dispositif permet d'éviter l'effraction de véhicule par des personnes désireuses de s'approprier les marchandises stockées à l'intérieur du véhicule. Ce dispositif définit également un plan supérieur du compartiment de stockage des marchandises.

Des premiers dispositifs de cache bagages sont constitués de panneaux repliables autour d'axes transversaux au véhicule. Le chargement de marchandises par l'arrière du véhicule s'effectue après repli du panneau arrière du cache bagage.

Des deuxièmes dispositifs de cache bagages comprennent des panneaux articulés autour d'axes parallèles à la longueur du véhicule. Le repli de ces panneaux permet de faciliter notablement le chargement de marchandises par les portes latérales du véhicule.

Des troisièmes dispositifs de cache bagages comprennent un panneau sous la forme d'une toile, également connu sous le nom de tendelet, destinée à couvrir un compartiment de bagages quand celui-ci n'est pas séparé de l'habitacle. Le panneau est déployé d'un rouleau placé au niveau du bord arrière supérieur de la banquette arrière, et peut s'enrouler à cet endroit quand il est relâché.

Certains dispositifs caches bagages possèdent des moyens de préhension permettant à l'utilisateur de déployer ou de rétracter ces dispositifs caches bagages.

### ÉTAT DE LA TECHNIQUE ANTÉRIEURE

On connaît par exemple d'après le document EP- 0.861.755 un dispositif cache bagage comprenant des moyens de préhension sous la forme d'une ouverture. L'utilisateur place un ou plusieurs doigts de sa main dans l'ouverture, qui constitue ainsi une prise permettant le déploiement ou le repliement du panneau au dessus du compartiment à bagages. Afin de ne pas laisser une ouverture permettant à une personne extérieure d'apercevoir les bagages placés dans le compartiment, un élément de recouvre cette ouverture. L'élément ou volet de recouvrement passe d'une position ouverte à une position fermée et inversement, rendant l'ouverture de préhension, respectivement accessible ou refermée. Pour ce faire, le volet est monté sur un pivot, situé au niveau d'un rebord de l'ouverture. Le volet est éventuellement associé à des moyens de rappel destinés à le refermer.

Cependant, le volet pivotant associé à son mécanisme présente une épaisseur trop importante par rapport au panneau. Le volet pivotant peut rester accroché à des objets situés dans le compartiment à bagages, laissant l'ouverture de préhension dégagée. De plus, un tel mécanisme à volet pivotant utilisé pour refermer l'ouverture de préhension s'avère relativement complexe à fabriquer et à monter.

### EXPOSÉ DE L'INVENTION

Un problème principal que se propose de résoudre l'invention consiste à mettre au point un dispositif formant cache destiné à recouvrir un compartiment à bagages pour un véhicule automobile. Un deuxième problème consiste à réaliser un dispositif cache bagage muni d'une ouverture de préhension pour déplacer un panneau de recouvrement d'une position escamotée à une position déployée et inversement. Un troisième problème est celui d'obtenir une occultation complète du compartiment à bagages, en prévoyant un moyen de fermeture réservé à l'ouverture de préhension. Un quatrième problème est celui d'optimiser le fonctionnement du moyen de fermeture pour dégager ou bloquer l'accès à l'ouverture de préhension. Un autre problème encore est de prévoir un moyen de fermeture qui soit à la fois simple, efficace et peu coûteux.

L'invention concerne donc un dispositif formant cache pour un compartiment à bagages de véhicule automobile, comprenant un panneau de recouvrement, pouvant passer d'une position escamotée à une position déployée et inversement. Le panneau de recouvrement est muni d'un moyen de préhension sous la forme d'une ouverture. L'ouverture est équipée d'un volet apte à passer d'une position ouverte à une position fermée et inversement. Le volet est destiné à recouvrir l'ouverture.

Conformément à un aspect de la présente invention, le dispositif formant cache est caractérisé en ce que le volet est apte à passer d'une position ouverte à une position fermée et inversement grâce à des moyens de coulissement.

Autrement dit, par coulissement du moyen de fermeture se présentant sous la forme d'un volet, l'ouverture de préhension devient accessible à l'utilisateur. Par coulissement en sens opposé, l'ouverture de préhension est obturée. Avec le volet, le contenu du compartiment à bagages ne peut être vu de l'extérieur du véhicule automobile.

Par un mouvement de la main, l'utilisateur dégage l'ouverture. L'utilisateur va ensuite placer ses doigts dans l'ouverture, pour agir et faire passer le panneau de recouvrement, à partir d'une position escamotée laissant le compartiment à bagage ouvert sur le dessus, jusqu'à une position déployée au dessus du compartiment à bagage, ou l'inverse.

De manière particulièrement favorable, les moyens de coulissement peuvent assurer le coulissement du volet d'avant en arrière et inversement. Dans la description de la présente invention, l'avant est défini comme correspondant au sens d'avancement du véhicule et au conducteur regardant à travers le pare-brise avant, et l'arrière est défini comme étant le sens de marche arrière du véhicule. Afin de permettre le coulissement de ce volet, les moyens de coulissement peuvent comprendre deux rainures latérales ménagées respectivement dans deux bordures latérales de l'ouverture.

Pour que l'utilisateur puisse facilement attraper le volet et le faire coulisser, ce volet peut être avantageusement muni d'un organe de saisie. L'organe de saisie peut se déployer transversalement vers le haut à partir d'une surface supérieure du volet, de façon à rester à la portée de la main de l'utilisateur. De préférence, l'organe de saisie peut être situé à l'une des extrémités libres du volet.

De manière ergonomique, l'organe de saisie peut favorablement présenter une forme convexe sensiblement arrondie. L'organe de saisie peut être situé à l'extrémité libre située en regard de l'ouverture.

Une bordure transversale de l'ouverture peut présenter une forme concave sensiblement arrondie. Cette forme concave peut être complémentaire de la forme convexe sensiblement arrondie de l'organe de saisie du volet, conférant au volet une esthétique agréable.

Le panneau de recouvrement peut passer d'une position escamotée à une position déployée par coulissement d'avant en arrière et inversement d'une position déployée à une position escamotée par coulissement d'arrière en avant. Le mouvement de coulissement du volet peut être sensiblement analogue au mouvement de coulissement de l'ensemble du panneau de recouvrement, conduisant à une meilleure ergonomie de l'ensemble du dispositif formant cache pour le compartiment à bagage.

### BRÈVE DESCRIPTION DES DESSINS

L'invention sera bien comprise et ses divers avantages et différentes caractéristiques ressortiront mieux lors de la description suivante, de l'exemple non limitatif de réalisation, en référence aux dessins schématiques annexés, dans lesquels :
- la Figure 1 représente une vue en perspective partielle d'un panneau de recouvrement, muni d'une ouverture de préhension, fermée par un volet en position fermée ; et
- la Figure 2 représente une vue en perspective partielle du panneau de la Figure 1, avec l'ouverture de préhension, fermée par un volet en position ouverte.

### EXPOSÉ DÉTAILLÉ DE MODES DE RÉALISATION PRÉFÉRÉS

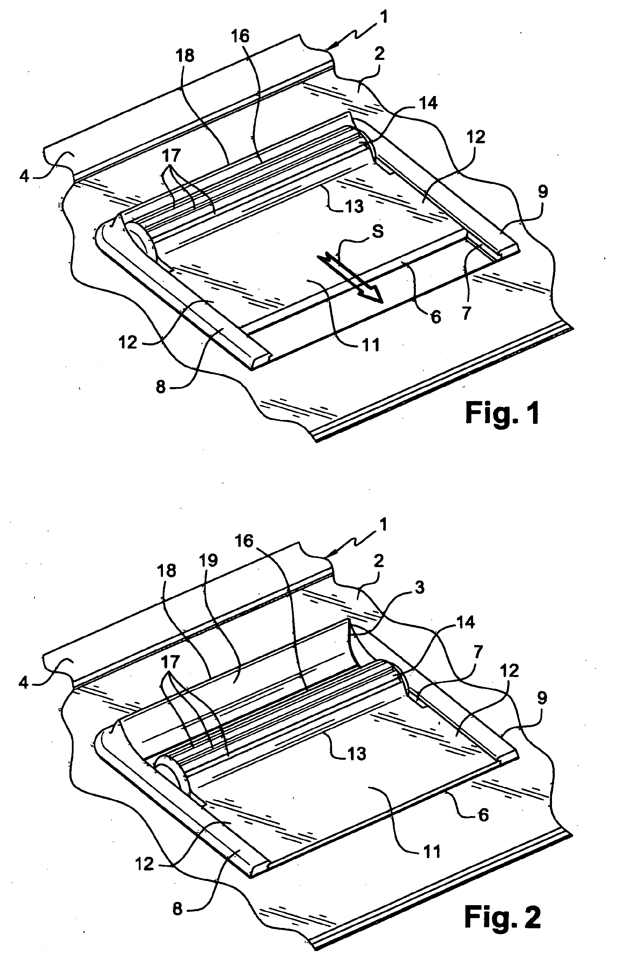

Comme l'illustrent les Figures 1 et 2, un dispositif cache bagage (1) pour un compartiment à bagages d'un véhicule automobile comprend un panneau principal (2), par exemple sous la forme d'une pièce textile sensiblement rectangulaire. Le panneau (2) est placé longitudinalement par rapport au véhicule automobile. Le panneau (2) se déploie et s'escamote d'avant en arrière à partir d'un enrouleur muni d'un mécanisme d'enroulement (non visible dans les Figures). L'enrouleur est disposé transversalement, par exemple à l'arrière des sièges avants.

Afin de faciliter le passage d'une position déployée à une position escamotée, le panneau (2) comprend une ouverture de préhension (3). L'ouverture (3) possède une forme sensiblement rectangulaire et est placée transversalement par rapport au panneau (2) et au véhicule. L'ouverture (3) est ménagée vers un bord transversal arrière (4) du panneau (2). L'ouverture (3) est dimensionnée de façon à laisser passer trois ou quatre doigts de l'utilisateur.

Selon l'invention, l'ouverture (3) est fermée par un volet coulissant (6). Le volet (6) passe d'une position fermée (voir Figure 1) à une position ouverte (voir Figure 2), grâce à des moyens de coulissement. Lorsque le volet (6) est ouvert, l'utilisateur peut se servir de l'ouverture de préhension (3). Lorsque le volet (6) est fermé, le contenu du compartiment à bagage est rendu totalement non visible par le panneau (2) et par le volet (6) fermant l'ouverture (3).

Les moyens de coulissement comprennent deux rainures latérales (7) respectivement prévues chacune dans une bordure latérale (8) d'un cadre (9) délimitant et rigidifiant l'ouverture (3). Le volet (6) est formé à partir d'une plaque principale (11) formant une surface supérieure située sensiblement dans le même plan que le panneau (2). Les deux tranches latérales (12) de la plaque (11) viennent respectivement s'insérer dans chacune des rainures latérales (7) du cadre (9).

En raison de la position des moyens de coulissement (7 et 12), le volet (6) glisse longitudinalement (Flèche S en Figure 1) par rapport au véhicule, à partir d'une position avant fermée (visible en Figure 1) vers une position arrière ouverte (visible en Figure 2) et inversement.

Pour faciliter l'ouverture et la fermeture du volet (6), ce dernier est muni d'un organe de saisie (13). L'organe de saisie (13) se présente sous une forme convexe sensiblement arrondie, analogue à un bossage (14), se déployant vers le haut à partir de la plaque (11) constitutive du volet (6). Le bossage (14) s'étend transversalement sur toute la largeur du volet (6).

Le bossage (14) est situé à l'extrémité libre (16) de la plaque (11) du volet (6), qui est immédiatement adjacente à l'ouverture (3). Cette extrémité libre (16) est située à l'arrière. Pour éviter aux doigts de l'utilisateur de glisser sur le bossage (14), ce dernier est muni de plusieurs rainures transversales (17).

Pour obtenir une occultation complète de l'ouverture (3) et une adaptation complète entre l'extrémité libre (16) avec son bossage (14) et le cadre (9), la bordure transversale arrière (18) du cadre (9) présente une forme (19) qui est complémentaire de celle du bossage (14). Cette forme (19) est disposée en creux par rapport à la plaque (11).

La présente invention n'est pas limitée aux modes de réalisation décrits et illustrés. De nombreuses modifications peuvent être réalisées, sans pour autant sortir du cadre défini par la portée du jeu de revendications.

## Revendications

1. Dispositif formant cache pour un compartiment à bagages de véhicule automobile, comprenant un panneau de recouvrement (2), pouvant passer d'une position escamotée à une position déployée et inversement, et muni d'un moyen de préhension sous la forme d'une ouverture (3), équipée d'un volet (6) apte à passer d'une position ouverte à une position fermée et inversement et destiné à recouvrir l'ouverture (3), **caractérisé en ce que** le volet (6) est apte à passer d'une position ouverte à une position fermée et inversement grâce à des moyens de coulissement (7, 12).

2. Dispositif selon la revendication 1, **caractérisé en ce que** les moyens de coulissement (7, 12) assurent le coulissement du volet d'avant en arrière et inversement.

3. Dispositif selon la revendication 1 ou 2, **caractérisé en ce que** les moyens de coulissement comprennent deux rainures latérales (7) ménagées respectivement dans deux bordures latérales (8) de l'ouverture (3).

4. Dispositif selon l'une quelconque des revendications précédentes, **caractérisé en ce que** le volet (6) est muni d'un organe de saisie (13) se déployant transversalement vers le haut à partir d'une surface supérieure du volet (6).

5. Dispositif selon la revendication 4, **caractérisé en ce que** l'organe de saisie (13) est situé à l'une des extrémités libres (16) du volet (6).

6. Dispositif selon la revendication 4 ou 5, **caractérisé en ce que** l'organe de saisie (13) présente une forme convexe sensiblement arrondie (14).

7. Dispositif selon l'une quelconque des revendications 4 à 6, **caractérisé en ce que** l'organe de saisie (13) est situé à l'extrémité libre (16) située en regard de l'ouverture (3).

8. Dispositif selon la revendication 6 ou 7, **caractérisé en ce qu'**une bordure transversale (18) de l'ouverture (3) présente une forme concave sensiblement arrondie (19), complémentaire de la forme convexe sensiblement arrondie (14) de l'organe de saisie (13) du volet (6).

9. Dispositif selon l'une quelconque des revendications précédentes, **caractérisé en ce que** le panneau de recouvrement (2) passe d'une position escamotée à une position déployée, par coulissement d'avant en arrière, et inversement.

## Claims

1. Device forming a screen for a luggage compartment of a motor vehicle, comprising a cover panel (2) which can move back and forth between a retracted position and an extended position and which has a handhold means in the form of an opening (3) fitted with a shutter (6) able to be moved back and forth between an open position and a closed position and intended to cover the opening (3), said device being **characterized in that** the shutter (6) can be moved back and forth between an open position and a closed position using sliding means (7, 12).

2. Device according to Claim 1, **characterized in that** the sliding means (7, 12) enable the shutter to be slid backwards and forwards.

3. Device according to Claim 1 or 2, **characterized in that** the sliding means comprise two lateral grooves (7) formed in two corresponding lateral edgepieces (8) of the opening (3).

4. Device according to any one of the preceding claims, **characterized in that** the shutter (6) has a grip (13) extending transversely upwards from an upper surface of the shutter (6).

5. Device according to Claim 4, **characterized in that** the grip (13) is situated at one of the free ends (16) of the shutter (6).

6. Device according to Claim 4 or 5, **characterized in that** the grip (13) is of a generally rounded convex shape (14).

7. Device according to any one of Claims 4 to 6, **characterized in that** the grip (13) is situated at the free end (16) over the opening (3).

8. Device according to Claim 6 or 7, **characterized in that** a transverse edgepiece (18) of the opening (3) is of a generally rounded concave shape (19) complementary to the generally rounded convex shape (14) of the grip (13) of the shutter (6).

9. Device according to any one of the preceding claims, **characterized in that** the cover panel (2) moves back and forth between a retracted position and an extended position by being slid backwards and forwards.

## Patentansprüche

1. Vorrichtung, die eine Abdeckung für einen Gepäckraum eines Kraftfahrzeugs bildet, mit einer Abdeckplatte (2), die sich von einer eingefahrenen Stellung in eine ausgefahrene Stellung und umgekehrt bewegen kann und versehen ist mit einem Griffmittel in Form einer Öffnung (3), die mit einer Klappe (6) ausgerüstet ist, die sich von einer geöffneten Stellung in eine geschlossene Stellung und umgekehrt bewegen kann und dazu bestimmt ist, die Öffnung (3) abzudecken, **dadurch gekennzeichnet, dass** sich die Klappe (6) mit Hilfe von Gleitmitteln (7, 12) von einer geöffneten Stellung in eine geschlossene Stellung und umgekehrt bewegen kann.

2. Vorrichtung nach Anspruch 1, **dadurch gekennzeichnet, dass** die Gleitmittel (7, 12) das Gleiten der Klappe von vorn nach hinten und umgekehrt sicherstellen.

3. Vorrichtung nach Anspruch 1 oder 2, **dadurch gekennzeichnet, dass** die Gleitmittel zwei seitliche Nuten (7) aufweisen, die in den zwei jeweiligen Seitenrändern (8) der Öffnung (3) ausgebildet sind.

4. Vorrichtung nach einem der vorhergehenden Ansprüche, **dadurch gekennzeichnet, dass** die Klappe (6) mit einem Greiforgan (13) versehen ist, das von einer oberen Oberfläche der Klappe (6) transversal nach oben ausfährt.

5. Vorrichtung nach Anspruch 4, **dadurch gekennzeichnet, dass** sich das Greiforgan (13) an einem der freien Enden (16) der Klappe (6) befindet.

6. Vorrichtung nach Anspruch 4 oder 5, **dadurch gekennzeichnet, dass** das Greiforgan (13) eine im Wesentlichen abgerundete konvexe Form (14) aufweist.

7. Vorrichtung nach einem der Ansprüche 4 bis 6, **dadurch gekennzeichnet, dass** sich das Greiforgan (13) an dem freien Ende (16) befindet, das sich gegenüber der Öffnung (3) befindet.

8. Vorrichtung nach Anspruch 6 oder 7, **dadurch gekennzeichnet, dass** ein transversaler Rand (18) der Öffnung (3) eine im Wesentliche abgerundete konkave Form (19) aufweist, die zu der im Wesentlichen abgerundeten konvexen Form (14) des Greiforgans (13) der Klappe (6) komplementär ist.

9. Vorrichtung nach einem der vorhergehenden Ansprüche, **dadurch gekennzeichnet, dass** sich die Abdeckplatte (2) von einer eingefahrenen Stellung in eine ausgefahrene Stellung durch Gleiten von vorn nach hinten und umgekehrt bewegt.
